# EUROPEAN PATENT SPECIFICATION

(11) **EP 0 998 403 B1**
(45) Date of publication and mention of the grant of the patent: **02.01.2003**
(21) Application number: 98935145.7
(22) Date of filing: 17.07.1998
(51) Int. Cl.: B60P 1/64

(54) **SLIDING BOGIE TRAILERS**
ANHÄNGER MIT VERSCHIEBBAREM DREHGESTELL
REMORQUES A BOGIES COULISSANTS

(30) Priority: 24.07.1997 GB 9715606
(43) Date of publication of application: 10.05.2000
(73) Proprietor: Raven, Kevin William, Ipswich, Suffolk IP6 0JH (GB); Raven, Paul Anthony, Suffolk, Suffolk IP14 1AX (GB)
(72) Inventor: Raven, Kevin William, Ipswich, Suffolk IP6 0JH (GB); Raven, Paul Anthony, Suffolk, Suffolk IP14 1AX (GB)
(74) Representative: McLean, Robert Andreas
(86) International application number: GB9802132
(87) International publication number: WO99005002

(56) References cited:
- EP-A- 0 094 701
- EP-A- 0 107 746
- DE-A- 1 580 019
- GB-A- 2 298 399
- US-A- 4 877 293
- US-A- 5 314 201

## Description

The present invention relates to sliding bogie trailers, and in particular to extendible skeletal or extendible flatbed truck trailers that may be used for carrying loads such as container loads or pallets, according to the features of the preamble of independent claim 1, and to a method relaled thereto according to claim 13.

Skeletal truck trailers often have a rear sliding bogie section and a forwards chassis section for connection to a tractor fifth wheel. This arrangement allows such trailers to be extendible between two lengths, for example 6.1 m (20 feet) and 12.2 m (40 feet). In one mode of usage, the length of the trailer is locked at either of these lengths for mounting of containers with these lengths. A 13.7 m (45 feet) container may also be carried on a 12.2 m trailer. Alternatively, the length of the trailer may be locked in the extended position to permit greater axle loading, according to the law. For example, a 6.1 m container above a certain weight may be required by law to be carried by a 12.2 m trailer in order to spread the axle loading.

There are many varieties of flatbed trailers that may be connected to and towed by a truck. Some consist mainly of a floored surface above the trailer frame; others have additional structural elements, for example, fold-down sides, curtain sides or top, rigid sides or top, and vertical side pillars. Such trailers are often used to transport a wide variety of items such as palletised goods, concrete or steel beams and logs.

Closest prior art document PCT/GB96/00361 discloses extendible skeletal and extendible flatbed trailers which comprise a pair of inwardly facing fifth wheel mechanisms preferably on the chassis section, between which an upstanding pin on the bogie section traverses as the trailer is moved between extended and retracted positions.

Other types of extendible trailer using different locking mechanisms are known, for example of the type disclosed in US 4,877,293 in which the sections are locked in place by a pair of steel pins or bolts which are inserted through and protrude laterally inwards through matching holes in the sections at the various extension positions.

In all of these prior art systems, it is necessary for an operator to control the operation of the locks, either manually, for example by pulling out a handle at each of the fifth wheel clasps, or by operating a series of buttons in order to control individually the clasps or locking bolt. At the same time, it is also necessary for the operator to ensure that the trailer wheels are braked, for example with a hand brake in the tractor cab, during the operation, because the trailer wheels need to grip the road to prevent the bogie from being pushed while the chassis section is moved between extended and retracted positions.

Whilst such systems have been very widely used, it is time consuming for an operator to have to set brake wheels and then control the operation of the bolts or clasps. It is also possible that an operator may make an error in setting the brakes, or wish to save time by not setting the brakes properly, thereby leading to a potential safety hazard.

It is an object of the present invention to provide a more convenient apparatus and method relating to extendible trailers.

Accordingly, the present invention provides an extendible trailer comprising: a wheeled bogie section; braking means including wheel brakes by which road-going wheels may be braked; a chassis section forwards of the bogie section, and relatively moveable with respect to the bogie section between an extended and a retracted position; section locking means by which the sections may be releasably secured in said positions; characterised in that the trailer has control means arranged to control the section locking means and the braking means so that the wheel brakes are engaged prior to and during the relative movement of the sections.

The control means may also be arranged to control the section locking means and the braking means so that the wheel brakes are disengaged after the relative movement of the sections.

The trailer may be a skeletal, flatbed or any other type of trailer that may be connected to a tractor or towed behind any other type of vehicle.

The control means may include an air driven mechanism connected, for example, to an air supply. Such air supplies are common on trailers having air-driven braking mechanisms.

One preferred form of section locking means comprises on one section a moveable member which may be moved in order to release the section locking means. Then, the braking means can including a sensor to detect the movement of the movable member to engage wheel brakes prior to and during the relative movement of the sections.

The term "movable member" as used herein includes arrangement having more than one moving part.

Preferably, another or the same sensor can also be used to detect the movement of the movable member when the section locking means secures the sections, for example movement in an opposite direction, so that the wheel brakes may be released after the relative movement of the sections.

The sensor could, for example, detect the activation of an air supply to a movable member, for example measuring air pressure. However, preferably the sensor detects the movement of the movable member, the brakes being engaged when the movable member is in position to disengage with a passive member. Similarly, the brakes can be released after the sensor has detected movement of the movable member to secure the sections. In this way, a direct measure may be had of the state of the section locking means.

The section locking means may comprise on one section at least one passive, or non-movable, member that engages with a moveable member on the other section when the sections are secured in position.

In a preferred embodiment, there are two movable members defining opposite ends of trailer extension and a passive member is relatively movable between the movable members. Both of said movable members may then have a sensor, the control means controlling the section locking means so that both movable members are activated so that they may engage with the passive member when the sections are between extended and retracted positions. In this way, the extendible trailer can be moved from one position, and then to the other position or if needed back into the same position, whereupon the sections can be secured together.

The movable member may be part of a fifth wheel locking mechanism on one section, the passive member being a pin on the other section. In this case, the fifth wheel mechanism can have a locking slide hammer to close the fifth wheel mechanism. The locking slide hammer is then the movable member, and the sensor can detect movement, or equivalently the presence, of the slide hammer when this is closed.

It would alternatively be possible for the movable member to be one, for example one of a pair, of steel pins or bolts which are inserted through and protrude laterally inwards through matching holes in one of the sections at least two extension positions.

Preferably, the slide hammer is latched open once a pin has been disengaged from the fifth wheel mechanism, the mechanism automatically engaging with the pin once the pin again enters the mechanism.

In any event, it is particularly advantageous if the section securing means is operable to secure automatically the sections when the sections are moved into position. Then, a driver of a truck tractor unit connected to the trailer will not be able to drive off with the sections moved to a new position, but not yet secured into engagement with each other.

Also according to the invention, there is provided a method of extending an extendible trailer that comprises: a wheeled bogie section; braking means including wheel brakes by which road-going wheels may be braked; a chassis section forwards of the bogie section, and relatively moveable with respect to the bogie section between an extended and a retracted position; section locking means by which the sections may be releasably secured in said positions; and control means arranged to control both the section locking means and braking means; characterised in that the method comprises the steps of:
i) using the control means to brake the wheels prior to the movement of the sections; and then
ii) with the wheels still braked, using the control means to release the section locking means so that the sections may be moved; and
iii) with the wheels still braked, moving the sections from one position to the other position.

The method may then additional comprise after step iii) the steps of:
iv) using the section locking means to secure the sections in the other position;
v) using the control means to release the brakes once the sections are secured in the other position.

When the trailer is connected to a truck tractor unit, the tractor may be used to move the sections from one position to the other position, with the driver pulling away from, or backing down upon, the trailer with its wheels braked under the control of the control means.

The invention will now be described by way of example, with reference to the accompanying drawings, in which:
Figure 1 is a top plan view of a prior art extendible skeletal trailer, with a forward chassis section with two fifth wheel clasps and a sliding rear bogie section with a pin, the sections being shown in between two locking positions;
Figure 2 is a partial view of an extendible skeletal trailer according to the invention showing a section locking means and a sensor arrangement for detecting the state of the locking means;
Figure 3 is a view of part of the locking means and sensor arrangement of Figure 2, shown in an engaged condition and with a sensor to detect the activation of a movable member;
Figure 4 is a view similar to that of Figure 3, showing the locking means fully activated, and with the locking slide hammer held back by a pneumatic piston so that it is open and ready to release and disengage with a pin;
Figure 5 is a view similar to that of Figures 3 and 4, showing the locking means activated, with the locking slide hammer latched open and ready to receive and engage with a pin; and
Figure 6 is a schematic diagram of a control means, means to detect the activation of a movable member, and detection means to detect the activation of a movable member, and means to engage the brakes when said slide hammer is activated to disengage with the pin.

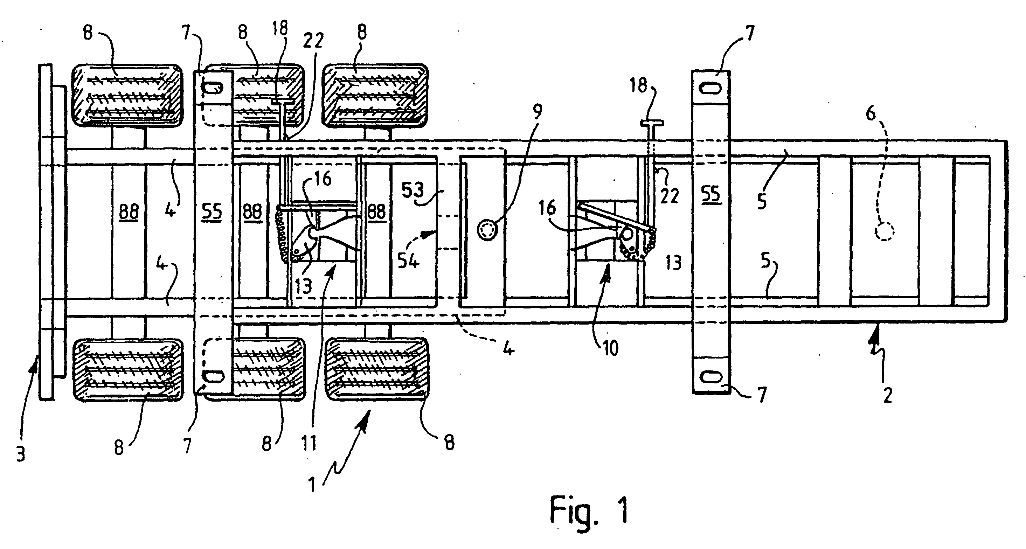

Referring first to Figure 1 this shows a known extendible skeletal trailer 1, described more fully in patent document PCT/GB96/00361. The trailer has two transverse beams 55 each with a pair of standard twist lock mounting points 7 for a 6.1 m (20 feet) container. A front chassis section 2 has along its sides a pair of load bearing parallel steel I-beams 5 which present to each other inward facing C-sections. A sliding rear bogie section 3 has along its sides a pair of parallel inward facing steel C-beams 4 which are nested inside and slidable along the rear and central parts of the front C-sections.

The front chassis section 2 has a downwardly facing king pin 6 for connection with a known fifth wheel on a tractor unit (not shown), and the rear bogie section 3 has a set of six wheels 8, three to a side, joined by three axles 88.

The front chassis section would, of course, normally be supported by drop-down support legs (not shown) when the trailer was not connected to a tractor.

The rear section 3 has an upwardly facing striker pin 9 which travels between a forward 10 and a rearward clasp 11 which are fixed to the front chassis section 2. The striker pin 9 and clasps 10,11 are in the middle of the trailer, centered on the width of the trailer.

The trailer is shown in between the fully extended and retracted positions. In the retracted position the striker pin 9 is held by the front clasp 10, and in the extended position the striker pin is held by the rear clasp 11.

The fifth wheel clasp mechanisms 10,11 each comprise a jaw 13 and a locking slide hammer 16, which may be manually retracted by a release arm 18. In an alternative prior art embodiment, not shown, the arms may be pneumatically driven by an air piston. However, the operation of this prior art extendible trailer is the same as that described below.

In order to extend or retract the trailer, the truck driver would first fix all wheel brakes on, and then manually retract one of the fifth wheel release arms 18 from the closed to the open position. Each arm is provided with a latch 22 which engages with a feature (not shown) on the outside of the trailer to temporarily hold back the slide hammer arm 18. The driver would then release just the brakes for the cab wheels and drive forwards or in reverse to retract the striker pin 9 from one of the clasps 10,11 and then engage the pin in the jaw 13 of the other clasp. The jaw would then automatically rotate to the closed position as described above, and the latch 22 could be manually released to close the slide hammer 16, whereupon the clasp would be locked to retain the striker pin and hold the trailer sections 2,3 in the extended or retracted position.

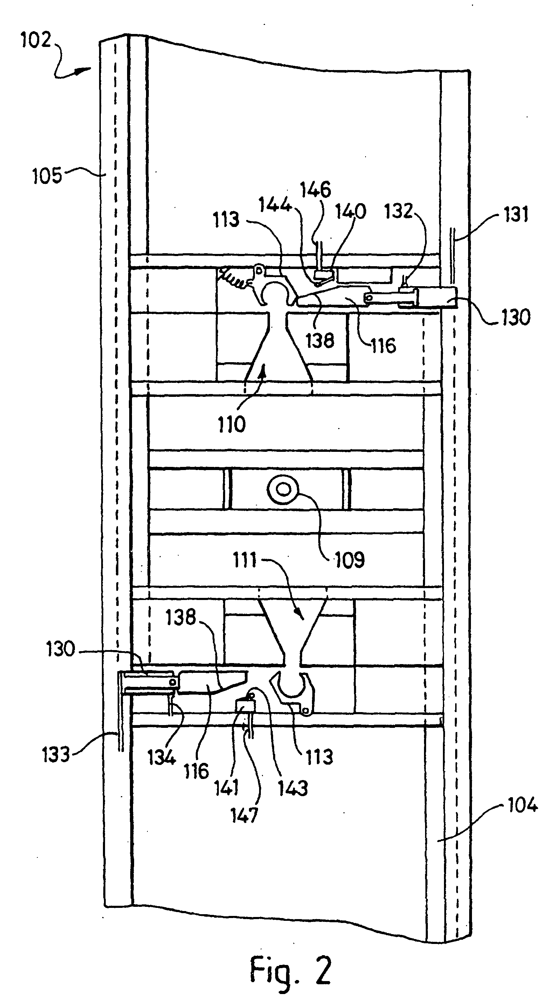

In Figure 2 to 6, components similar to those of the prior art trailer described above have corresponding reference numerals incremented by 100.

Referring now to Figure 2, which shows part of an extendible trailer 102, which can be either flatbed or skeletal. A pair of fifth wheel clasp mechanisms 110,111 have a passive member in the form of a pin 109 which travels between and which may be engaged in either mechanism. The mechanisms 110,111 each have a movable member, in particular a jaw 113 and a locking slide hammer 116. The slide hammer 116 is spring biased into the closed position across the jaw 113.

Each slide hammer 116 may be activated by a pneumatic piston 130 which drives the slide hammer 116. Each piston is driven by a pair of air lines 131,132;133,134, the arrangement inside the piston being such that each piston 130 may be positively driven in either direction, either to open or to shut across the jaw 113.

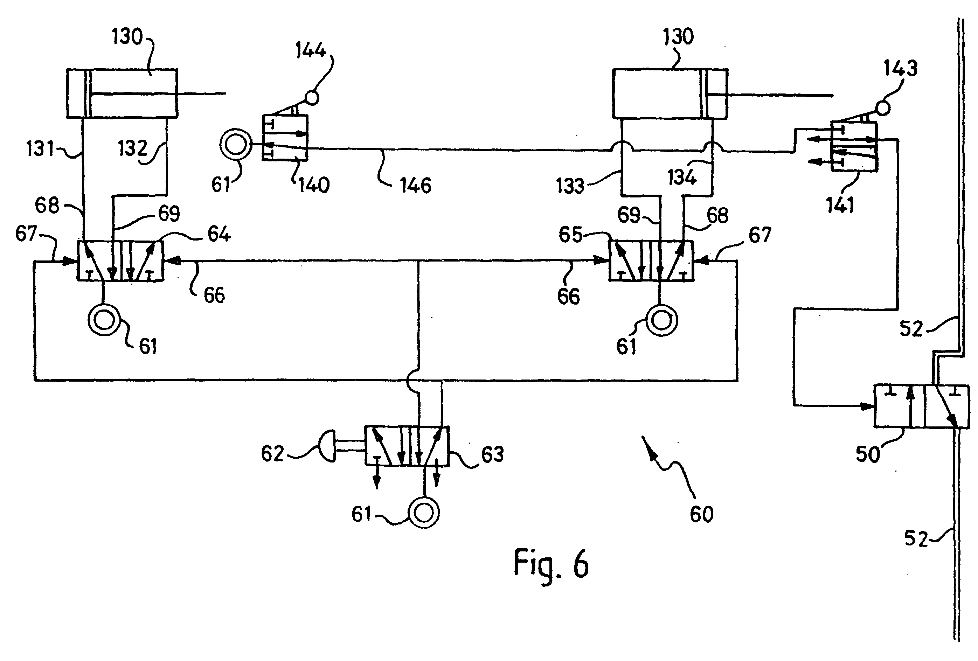

The slide hammers each have a tapered surface 138. In proximity with this surface of each of the slide hammers are movement sensors 140,141, which have a toggle arm, 143,144, which is depressed when the slide hammer 116 is fully across the jaw 116. Otherwise, as illustrated in Figure 2, each of the toggle arms 143,144 is up. One of the sensors 140 is supplied with a constant air feed, and has as an output a pneumatic line 146 that is an input pneumatic line for the other sensor 141, explained in more detail below in relation to Figure 6.

The arrangement of the piston air lines 131,132;133,134 to each piston 130 is such that air is always supplied to one or the other of the lines 131,132;133,134. In the event of air being cut to the piston 130, the spring bias keeps the slide hammer 116 engaged across the jaw 113.

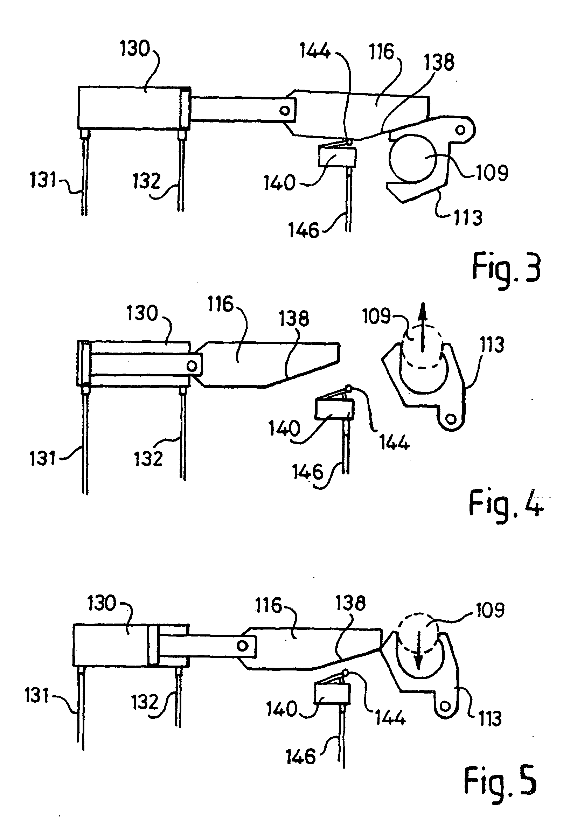

The slide hammer 116 and sensor 140,141 arrangement is shown in more detail in Figures 3, 4 and 5. In Figure 3, air is supplied to pneumatic line 131, and so the slide hammer 116 is fully across the jaw 113. The pin 109 is then engaged within the clasp mechanism. The toggle arm 144 is depressed having detected the movement of the slide hammer 116 into the engaged position. As will be explained later, this cuts the flow of air into line 146.

In Figure 4, air is supplied to line 132 in order to activate the slide hammer into a fully retracted position, whereupon the pin 109, shown in phantom, may freely leave the jaw 113. The toggle arm 144 is then in the extended position, which allows air to pressurise line 146.

Figure 5 shows the clasp awaiting the pin 109. Here, the air is supplied to line 131, but the slide hammer 116 is latched back by the open jaw 113, and so cannot close the jaw. However, once the pin 109 enters the jaw, the clasp automatically rotates to let the slide hammer 116 engage across the jaw 113.

Returning to Figure 4, once the pin 109 has left the jaw 113, it can be seen that the pin may traverse to the other clasp, and be automatically engaged therein, whilst the first slide hammer remains latched in the open position.

Figure 6 shows schematically the control means 60 for controlling the locking means. The control means 60 is supplied with a constant feed of air 61, whenever the trailer is connected to an air supply. A two position push button switch 62 mounted on a side of the trailer accessible to the driver, and controls a standard twin single pole, double throw air valve 63, one half of which is not used.

In one position (as illustrated) the air from the valve 63 passes to one side 66 of a pair of similar air valves 64,65. The similar air valves 64,65 control the flow of air to the pistons 130. In the other position, the air from the valve 63 passes to the other side 67 of the similar air valves 64,65. The arrangement is such that the air supply 66,67 is isolated from the outputs 68,69 of the similar valves 64,65. The outputs 68,69 are then connected to the piston air lines 131,132;133,134 described above.

The operation of the control system 60 may now be described in more detail. The push button 62 is pushed or pulled to the alternate position by a driver whenever the trailer is to be extended or retracted. This switches the air supply between lines 66,67, and this switches the air supply between lines 131,132. Therefore the piston 130 which had been activated, becomes deactivated, and vice versa. This has the effect of withdrawing the one slide hammer 116 which had been across its jaw 113.

Referring now to the sensors 140,141, as mentioned above sensor 140 is connected to a constant air feed 61. The output air line 146 from sensor 140 is fed into the inlet of the other sensor 141, so that the sensors 140,141 are in series. Therefore, when both sensors sense that the slide hammer is not across its jaw (i.e. both slide hammers are activated into a retracted position), the outlet 147 of sensor 141 is pressurised, and this is fed through a shuttle valve 50 to the so-called "red air line" 52, in order to switch off the air supply to this red air line 52, whereupon the wheels automatically become braked.

Once the pin 109 has entered the other clasp mechanism, the slide hammer 116 for that mechanism will automatically slide across its jaw, and this will cut the air supply through its sensor 140,141, thereby releasing the shuttle valve 50 and the brakes.

During this operation the driver need only to leave his cab and go to the side of the trailer once, to push or pull the button 62 once, and then return to his cab to back down or pull away from the trailer bogie section, knowing that the bogie wheels are braked. As soon as the trailer is engaged in the new position, the bogie brakes are released. The extendible trailer according to the invention can therefore be moved between extended and retracted positions whilst the locking of wheels is conveniently, automatically and safely controlled.

## Claims

1. An extendible trailer comprising: a wheeled bogie section (103); braking means (50,52) including wheel brakes by which road-going wheels (8) may be braked; a chassis section (102) forwards of the bogie section (103), and relatively moveable with respect to the bogie section between an extended and a retracted position; section locking means (109,110,111) by which the sections may be releasably secured in said positions; **characterised in that** the trailer has control means (60) arranged to control the section locking means (109,110,111) and the braking means (50,52) so that the wheel brakes are engaged prior to and during the relative movement of the sections (102,103).

2. An extendible trailer as claimed in Claim 1, in which the control means (60) is arranged to control the section locking means (109,110,111) and the braking means (50,52) so that the wheel brakes are disengaged after the relative movement of the sections (102,103).

3. An extendible trailer as claimed in Claim 1, in which the section locking means (109,110,111) comprises on one section (102,103) a moveable member (113,116) which may be moved in order to release the section locking means (109,110,111), the braking means (50,52) including a sensor (140,141) to detect the movement of the movable member (113,116) to engage wheel brakes prior to and during the relative movement of the sections (102,103).

4. An extendible trailer as claimed in Claim 2, in which the section locking means (109,110,111) comprises on one section a movable member (113,116) which may be moved in order to secure the section locking means (109,110,111), the braking means (50,52) including a sensor (140,141) to detect the movement of the movable member (113,116) to release wheel brakes after the relative movement of the sections (102,103).

5. An extendible trailer as claimed in Claim 3 or Claim 4, in which the section locking means (109,110,111) comprises on one section (102,103) at least one passive member (109) that engages with a movable member (113,116) on the other section when the sections (102,103) are secured in position.

6. An extendible trailer as claimed in Claim 5, in which there are two movable members (113,116) defining opposite ends of trailer extension and a passive member (109) is relatively movable between the movable members (113,116).

7. An extendible trailer as claimed in Claim 5 or Claim 6, in which the movable member (113,116) is part of a fifth wheel locking mechanism (110,111) on one section (102), the passive member being a pin (109) on the other section (103).

8. An extendible trailer as claimed in Claim 7, in which the fifth wheel mechanism (110,111) has a locking slide hammer (116) to close the fifth wheel mechanism, the sensor (140,141) detecting movement of the slide hammer (116).

9. An extendible trailer as claimed in Claim 8, in which the sensor (140,141) detects the presence of the slide hammer (116) when the slide hammer closed.

10. An extendible trailer as claimed in Claim 8 or Claim 9, in which the slide hammer (116) is latched open once the pin (109) has been disengaged from the fifth wheel mechanism (110,111), the mechanism automatically engaging with the pin (109) once the pin again enters the mechanism (110,111).

11. An extendible trailer as claimed in any one of Claims 1 to 9, in which the section securing means (109,110,111) is operable to secure automatically the sections (102,103) when the sections (102,103) are moved into position.

12. A truck, comprising a tractor unit and an extendible trailer as claimed in any preceding claim.

13. A method of extending an extendible trailer that comprises: a wheeled bogie section (103); braking means (50,52) including wheel brakes by which road-going wheels (8) may be braked; a chassis section (102) forwards of the bogie section (103), and relatively moveable with respect to the bogie section between an extended and a retracted position; section locking means (109,110,111) by which the sections (102,103) may be releasably secured in said positions; and control means (60) arranged to control both the section locking means (109,110,111) and braking means (50,52); **characterised in that** the method comprises the steps of:
i) using the control means (60) to brake the wheels (8) prior to the movement of the sections (102,103); and then
ii) with the wheels (8) still braked, using the control means (60) to release the section locking means (109,110,111) so that the sections (102,103) may be moved; and
iii) with the wheels (8) still braked, moving the sections (102,103) from one position to the other position.

14. A method of extending an extendible trailer as claimed in Claim 13, in which the method comprises, after step iii) the steps of:
iv) using the section locking means (109,110,111) to secure the sections (102,103) in the other position;
v) using the control means to (60) release the brakes once the sections (102,103) are secured in the other position.

15. A method of extending an extendible trailer as claimed in Claim 13 or Claim 14, in which the trailer is connected to a tractor unit, in which the tractor unit is used in step iii) to move the sections (102,103) from one position to the other position.

## Patentansprüche

1. Ausziehbarer Anhänger, umfassend: einen Fahrgestellbereich (103) mit Rädern; Bremseinrichtungen (50, 52), die Radbremsen beinhalten, mittels welchen die auf der Straße laufenden Räder (8) gebremst werden können; einen Chassisbereich (102) vor dem Fahrgestellbereich (103) und in Bezug auf den Fahrgestellbereich relativ zwischen einer ausgezogenen und einer eingefahrenen Stellung bewegbar; Verriegelungseinrichtungen (109, 110, 111) für die Bereiche, mittels welchen die Bereiche lösbar in diesen Stellungen gesichert werden können;
**dadurch gekennzeichnet,**
**dass** der Anhänger eine Steuereinrichtung (60) aufweist, die dafür vorgesehen sind, die Bereichsverriegelungseinrichtungen (109, 110, 111) und die Bremseinrichtungen (50, 52) in solcher Weise zu steuern, dass die Radbremsen vor und während der relativen Bewegung der Bereiche (102, 103) in Anlage stehen.

2. Ausziehbarer Anhänger nach Anspruch 1, bei dem die Steuereinrichtung (60) dafür vorgesehen ist, die Steuerung der Bereichsverriegelungseinrichtungen (109, 110, 111) und der Bremseinrichtungen (50, 52) in solcher Weise zu steuern, dass die Radbremsen nach der relativen Bewegung der Bereiche (102, 103) gelöst werden.

3. Ausziehbarer Anhänger nach Anspruch 1, bei dem die Bereichsverriegelungseinrichtungen (109, 110, 111) an einem Bereich (102, 103) ein bewegbares Element (113, 116) umfassen, welches bewegt werden kann, um die Bereichsverriegelungseinrichtungen (109, 110, 111) zu lösen, wobei die Bremseinrichtungen (50, 52) einen Sensor (140, 141) beinhalten, um die Bewegung des bewegbaren Elements (113, 116) zu erkennen, um die Radbremsen vor und während der relativen Bewegung der Bereiche (102, 103) in Anlage zu halten.

4. Ausziehbarer Anhänger nach Anspruch 2, bei dem die Bereichsverriegelungseinrichtungen (109, 110, 111) an einem Bereich ein bewegbares Element (113, 116) umfassen, welches bewegt werden kann, um die Bereichsverriegelungseinrichtungen (109, 110, 111) zu sichern, wobei die Bremseinrichtungen (50, 52) einen Sensor (140, 141) beinhalten, um die Bewegung des bewegbaren Elements (113, 116) zu erkennen, um die Radbremsen nach der relativen Bewegung der Bereiche (102, 103) zu lösen.

5. Ausziehbarer Anhänger nach Anspruch 3 oder Anspruch 4, bei dem die Bereichsverriegelungseinrichtungen (109, 110, 111)) an einem Bereich (102, 103) wenigstens ein passives Element (109) umfassen, das in Eingriff mit einem bewegbaren Element (113, 116) an dem anderen Bereich steht, wenn die Bereiche (102, 103) in ihrer Stellung gesichert sind.

6. Ausziehbarer Anhänger nach Anspruch 5, bei dem zwei bewegbare Elemente (113, 116) vorhanden sind, die gegenüberliegende Enden der Längenausdehnung des Anhängers bestimmen, und wobei ein passives Element (109) relativ zwischen den bewegbaren Elementen (113, 116) bewegbar ist.

7. Ausziehbarer Anhänger nach Anspruch 5 oder Anspruch 6, bei dem das bewegbare Element (113, 116) Teil eines Aufsattel-Verriegelungsmechanismus (110, 111) an einem Bereich (102) ist, wobei das passive Element ein Zapfen (109) an dem anderen Bereich (103) ist.

8. Ausziehbarer Anhänger nach Anspruch 7, bei welchem der Aufsattelmechanismus (110, 111) eine verriegelnde Gleitklaue (116) aufweist, um den Aufsattelmechanismus zu schließen, wobei der Sensor (140, 141) die Bewegung der Gleitklaue (116) erkennt.

9. Ausziehbarer Anhänger nach Anspruch 8, bei dem der Sensor (140, 141) das Vorhandensein der Gleitklaue (116) erkennt, wenn die Gleitklaue geschlossen ist.

10. Ausziehbarer Anhänger nach Anspruch 8 oder Anspruch 9, bei dem die Gleitklaue (116) ausgeklinkt ist, sobald der Zapfen (109) aus dem Aufsattelmechanismus (110, 111) gelöst ist, wobei der Mechanismus automatisch mit dem Zapfen (109) in Eingriff kommt, sobald der Zapfen erneut in den Mechanismus (110, 111) eintritt.

11. Ausziehbarer Anhänger nach einem der Ansprüche 1 bis 9, bei dem die Bereichssicherungseinrichtungen (109, 110, 111) so betrieben werden können, dass sie die Bereiche (102, 103) automatisch sichern, wenn die Bereiche (102, 103) in ihre Stellung bewegt sind.

12. Ein Lastkraftwagen, der eine Zugmaschineneinheit und einen ausziehbaren Anhänger nach einem der vorhergehenden Ansprüche umfasst.

13. Verfahren zum Ausziehen eines ausziehbaren Anhängers, der Folgendes umfasst: einen Fahrgestellbereich (103) mit Rädern; Bremseinrichtungen (50, 52), die Radbremsen beinhalten, mittels welchen die auf der Straße laufenden Räder (8) gebremst werden können; einen Chassisbereich (102) vor dem Fahrgestellbereich (103) und in Bezug auf den Fahrgestellbereich relativ zwischen einer ausgezogenen und einer eingefahrenen Stellung bewegbar; Bereichsverriegelungseinrichtungen (109, 110, 111), mittels welchen die Bereiche lösbar in diesen Stellungen gesichert werden können; und eine Steuereinrichtung (60), die dafür vorgesehen ist, sowohl die Bereichsverriegelungseinrichtungen (109, 110, 111) als auch die Bremseinrichtungen (50, 52) zu steuern,
**dadurch gekennzeichnet,**
**dass** das Verfahren folgende Schritte umfasst:
i) Verwenden der Steuereinrichtung (60), um die Räder (8) vor der Bewegung der Bereiche (102, 103) zu bremsen; und danach
ii) während die Räder (8) noch gebremst sind, Verwenden der Steuereinrichtung (60), um die Bereichsverriegelungseinrichtungen (109, 110, 111) zu lösen, so dass die Bereiche (102, 103) bewegt werden können; und
iii) während die Räder (8) noch gebremst sind, Bewegen der Bereiche (102, 103) aus einer Stellung in die andere Stellung.

14. Verfahren zum Ausziehen eines ausziehbaren Anhängers nach Anspruch 13, wobei das Verfahren nach dem Schritt iii) die folgenden Schritte umfasst:
iv) Verwenden der Bereichsverriegelungseinrichtungen (109, 110, 111), um die Bereiche (102, 103) in der anderen Stellung zu sichern;
v) Verwenden der Steuereinrichtung (60), um die Bremsen zu lösen, sobald die Bereiche (102, 103) in der anderen Stellung gesichert sind.

15. Verfahren zum Ausziehen eines ausziehbaren Anhängers nach Anspruch 13 oder Anspruch 14, bei dem der Anhänger mit einer Zugmaschineneinheit verbunden ist, wobei die Zugmaschineneinheit in Schritt iii) verwendet wird, um die Bereiche (102, 103) aus einer Stellung in die andere Stellung zu bewegen.

## Revendications

1. Remorque télescopique comprenant : une section de bogie à roues (103), des moyens de freinage (50, 52) incluant des freins de roue au moyen desquels les roues sur pneumatiques (8) peuvent être freinées ; une section de châssis (102) placée devant la section de bogie (103), et relativement mobile par rapport à cette dernière entre une position d'extension et d'une position rétractée, des moyens de verrouillage de section (109, 110, 111) au moyen desquels les sections peuvent être bloquées de manière non permanente dans lesdites positions ; **caractérisé en ce que** la remorque possède un moyen de commande (60) conçu pour commander les moyens de verrouillage de section (109, 110, 111) et les moyens de freinage (50, 52) de façon que les freins de roue s'engagent avant et pendant le mouvement relatif des sections (102, 103).

2. Remorque télescopique selon la revendication 1, dans laquelle le moyen de commande (60) est conçu pour commander les moyens de verrouillage de section (109, 110, 111) et les moyens de freinage (50, 52) de façon que les freins de roue soient relâchés après le mouvement relatif des sections (102, 103).

3. Remorque télescopique selon la revendication 1, dans laquelle les moyens de verrouillage de section (109, 110, 111) comprennent sur une section (102, 103) un élément mobile (113, 116) qui peut être déplacé afin de relâcher les moyens de verrouillage de section (109, 110, 111), les moyens de freinage (50, 52) incluant un capteur (140, 141) destiné à détecter le mouvement de l'élément mobile (113, 116) pour engager les freins de roue avant et pendant le mouvement relatif des sections (102, 103).

4. Remorque télescopique selon la revendication 2, dans laquelle les moyens de verrouillage de section (109, 110, 111) comprennent sur une section un élément mobile (113, 116) qui peut être déplacé afin de bloquer les moyens de verrouillage de section (109, 110, 111), les moyens de freinage (50, 52) incluant un capteur (140, 141) destiné à détecter le mouvement de l'élément mobile (113, 116) pour relâcher les freins de roue après le mouvement relatif des sections (102, 103).

5. Remorque télescopique selon la revendication 3 ou 4, dans laquelle les moyens de verrouillage de section (109, 110, 111) comprennent sur une section (102, 103) au moins un élément passif (109) qui s'engage avec un élément mobile (113, 116) placé sur l'autre section lorsque les sections (102, 103) sont bloquées en position.

6. Remorque télescopique selon la revendication 5, dans laquelle il y a deux éléments mobiles (113, 116) définissant des extrémités opposées de l'extension de remorque et un élément passif (109) est relativement mobile entre les éléments mobiles (113, 116).

7. Remorque télescopique selon la revendication 5 ou 6, dans laquelle l'élément mobile (113, 116) fait partie d'un cinquième mécanisme de blocage de roue (110, 111) sur une section (102), l'élément passif étant un axe (109) situé sur l'autre section (103).

8. Remorque télescopique selon la revendication 7, dans laquelle le cinquième mécanisme de roue (110, 111) comprend un marteau de blocage à inertie (116) destiné à fermer le cinquième mécanisme de roue, le capteur (140, 141) détectant le mouvement du marteau à inertie (116).

9. Remorque télescopique selon la revendication 8, dans laquelle le capteur (140, 141) détecte la présence du marteau à inertie (116) lorsque celui-ci se ferme.

10. Remorque télescopique selon la revendication 8 ou 9, dans laquelle le marteau à inertie (116) est bloqué en position ouverte lorsque l'axe (109) a été dégagé du cinquième mécanisme de roue (110, 111), le mécanisme s'engageant automatiquement avec l'axe (109) lorsque celui-ci pénètre de nouveau dans le mécanisme (110, 111).

11. Remorque télescopique selon l'une quelconque des revendications 1 à 9, dans laquelle les moyens de verrouillage de section (109, 110, 111) peuvent être actionnés pour bloquer automatiquement les sections (102, 103) lorsque celles-ci sont déplacées en position.

12. Camion comprenant une unité de porteur remorqueur et une remorque télescopique selon l'une quelconque des revendications précédentes.

13. Procédé d'extension d'une remorque télescopique qui comprend : une section de bogie à roues (103), des moyens de freinage (50, 52) incluant des freins de roue au moyen desquels les roues sur pneumatiques (8) peuvent être freinées ; une section de châssis (102) placée devant la section de bogie (103), et relativement mobile par rapport à cette dernière entre une position d'extension et d'une position rétractée, des moyens de verrouillage de section (109, 110, 111) au moyen desquels les sections peuvent être bloquées de manière non permanente dans lesdites positions ; et un moyen de commande (60) conçu pour commander les moyens de verrouillage de section (109, 110, 111) et les moyens de freinage (50, 52) ; **caractérisé en ce que** le procédé comprend les étapes consistant à :
i) utiliser le moyen de commande (60) pour freiner les roues (8) avant le mouvement des sections (102, 103) ; puis
ii) les roues (8) étant toujours freinées, utiliser le moyen de commande (60) pour relâcher les moyens de verrouillage de section (109, 110, 111) afin que les sections (102, 103) puissent être déplacées ; et
iii) les roues (8) étant toujours freinées, déplacer les sections (102, 103) d'une position à l'autre.

14. Procédé d'extension d'une remorque télescopique selon la revendication 13, dans lequel le procédé comprend, après l'étape iii), les étapes consistant à :
iv) utiliser les moyens de verrouillage de section (109, 110, 111) pour bloquer les sections (102, 103) dans l'autre position ;
v) utiliser le moyen de commande (60) pour relâcher les freins lorsque les sections (102, 103) sont bloquées dans l'autre position.

15. Procédé d'extension d'une remorque télescopique selon la revendication 13 ou 14, dans lequel la remorque est reliée à une unité de porteur remorqueur, dans lequel l'unité de porteur remorqueur est utilisée à l'étape iii) pour déplacer les sections (102, 103) d'une position vers l'autre position.
